# EUROPEAN PATENT APPLICATION

(11) **EP 4 644 243 A1**
(43) Date of publication of application: **05.11.2025**
(21) Application number: 24173072.0
(22) Date of filing: 29.04.2024
(51) Int. Cl.: B64D 11/00, E05D 11/06, E05D 15/26

(54) **MONUMENT FOR AN AIRCRAFT AND OPENING METHOD**

(71) Applicant: Airbus Operations GmbH, 21129 Hamburg (DE)
(72) Inventor: Gleixner, Lukas, 21129 Hamburg (DE); Benthien, Hermann, 21129 Hamburg (DE); Augenstein, Christoph, 21129 Hamburg (DE)

(57) **Abstract**

Disclosed is a monument for an aircraft having a multi-part flap enabling a folding of the flap partially during opening, and a method.

## Description

The present invention refers to a monument of an aircraft such as an overhead stowage compartment (OHSC), and to a method to open such monument if it is locked.

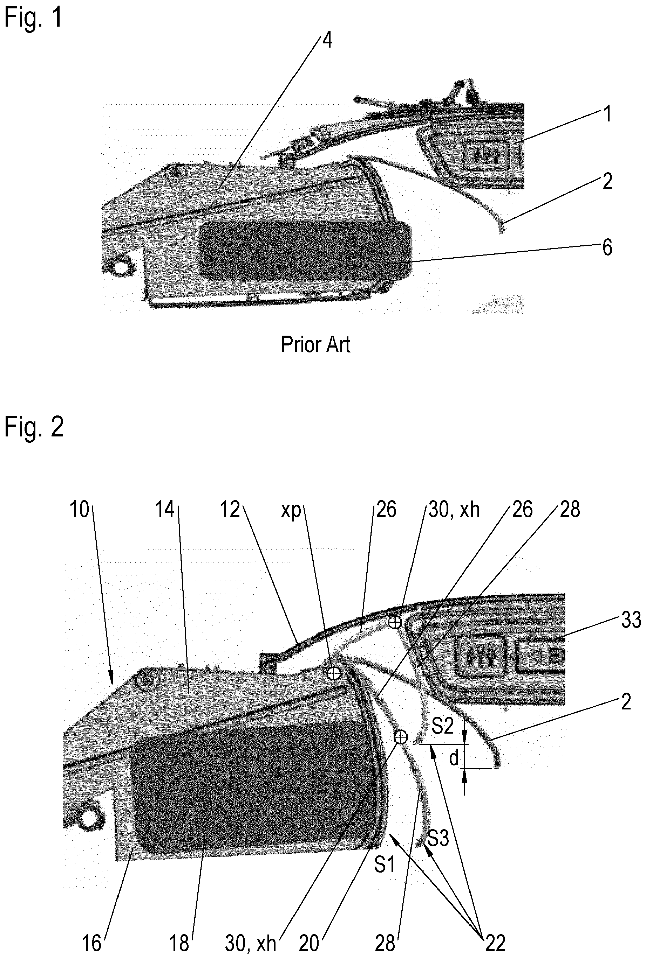

In aircrafts, monuments such as overhead stowage compartments (OHSC), are positioned above the passenger seats. In order to avoid that passenger luggage which is placed inside the monuments falls down during flight, each monument has a flap which covers its opening. By operating a latch at a lower edge of the flap, the flap can be pivoted upwards around an upper pivot axis. As shown in Figure 1, in cabin areas, where installations 1 such as centre ceiling stowage are provided, the flap 2 abut against them before they are fully turned upwards. Thus, the access to the monument 4 and in particular its opening is limited, which makes it difficult for the passenger to put in and take out luggage 6.

It is an object of the present invention to provide a monument for an aircraft cabin enabling an optimised access to its opening even if the space in the environment to open the monument is limited, and a method to open such a monument.

The object is achieved by a monument with the features of claim 1, and by a method with the features of claim 8. Advantageous embodiments are disclosed in the dependent claims, the description and the figures.

According to the invention, a monument of an aircraft, for instance an overhead stowage compartment, has an interior and a flap. The interior is adapted to create a stowage area for objects, for instance luggage. The flap is adapted to cover an opening of the interior so that the objects within the interior are secured against falling out of the interior. The flap is arranged pivotable around a pivot axis and secured against unintentionally opening. The flap comprises at least an upper cover part and a lower cover part. The upper and lower parts are connected to each other by a hinge having a hinge axis extending parallel to the pivot axis. In order to lock and unlock the hinge, a locking and unlocking mechanism is provided.

Due to the multiple part arrangement of the flap and the hinge, the flap will be folded during opening. Thus, less space is needed to be open the inventive flap fully compared to a known flap. By means of the locking and unlocking mechanism, the hinge is blocked or unblocked when needed, so that in a close state, the upper and lower parts are forming a rigid (stiff) flap.

In order to simplify the operation of the flap, the locking and unlocking mechanism comprises at least one locking element which is in operative connecting with a latch which is adapted to be operated by a user in order to open the flap. The operative connection can be realised in different ways, for instance mechanically, electromechanically, magnetically, electrically, etc.

According to a preferred embodiment, the at least locking element can interact with a body forming the hinge axis such that in the locked state of the hinge the at least one locking device is in form fit engagement with the body and in the unlocked state the engagement is abolished. The form fit engagement enables a reliably locking.

The at least one locking element can be a pin-like element which is pre-tensioned in its locked position. By means of this, in the fall safe state the hinge is blocked automatically.

Preferably, a plurality of locking elements is provided which are evenly distributed along the hinge axis. By means of this, first a redundancy is given. Second, the hinge is bear loaded evenly by the locking elements.

The hinge can be a piano hinge with two hinge halves. The body forming the hinge axis can then be a tube-like body extending through adjacent ring-shaped mounting sections of the piano hinge halves. In order to get in form fit engagement with the locking elements, the body can has recesses. Such a hinge arrangement needs only a few components and can be easily adapted to different opening width.

In order to achieve an easy cleaning of the flap, the hinge is integrated in the upper part and the lower part of the flap such that a smooth outer flap surface facing the cabin in the closed state.

According to an inventive method to open a closed monument of an aircraft, a flap covering an opening of an interior of the monument is folded partially during an opening movement.

During a closing movement, the flap will be unfolded. By means of this, the flap is transferred automatically back in its unfolded state without any intermediate step a user has to do.

In order to facility an opening movement, it is preferred when by operating a flap latch in order to unlock the flap, the flap is prepared automatically for folding. Thus, the flap is transferred into its stiff state before the opening is fully closed.

In what follows, preferred embodiments of the present invention are explained with respect to the accompanying drawings. As is to be understood, the various elements and components are depicted as examples only, may be facultative and/or combined in a manner different than that depicted. Reference signs for related elements are used comprehensively and not necessarily defined again for each figure. Shown is schematically in
- Figure 1: a side view of a known monument in an aircraft cabin in its opened state;
- Figure 2: a side view of an inventive monument in an aircraft cabin in different states;
- Figure 3: a perspective outer view of flap of the monument shown in Figure 2 in an unfolded state;
- Figure 4: a perspective inner view of flap of the monument shown in Figure 2 in an unfolded state;
- Figure 5: a perspective side view of flap of the monument shown in Figure 2 in a folded state;
- Figure 6: a hinge of the flap enabling the folding shown in Figures 2, 3 and 4,
- Figure 7: an integration of a hinge in a flap;
- Figure 8: a principal sketch of the hinge in its locked state; and
- Figure 9: a principal sketch of the hinge in its unlocked state;

In Figure 2, a side view of an inventive monument 10 is shown. Here, the monument 10 is an overhead stowage compartment. It positioned below a ceiling 12 of an aircraft cabin above not shown passenger seats. It has a casing 14 defining an interior 16 which is adapted to create a stowage area for luggage 18. For illustrative reasons, a known flap 2 is shown in Figure 2 in its opened state.

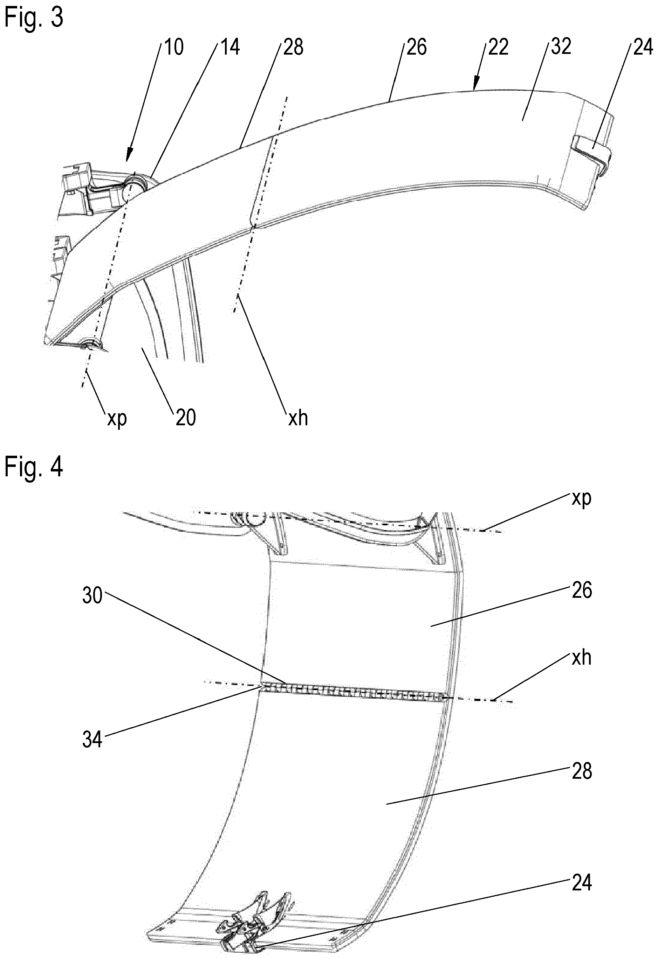

In order to place the luggage 18 inside the interior 16, the casing 14 (monument 10) has an opening 20 at its front side facing the cabin. The opening 20 can be closed by a flap 22 which is pivotable arranged around a pivot axis xp at an upper front section of the casing 14. The pivot axis xp extends orthogonally to the drawing plane. By means of activating a latch 24 on a lower edge region of the flap 20 (for instance Figure 3), a passenger can release the flap so that it turns around the pivot axis xp upwards and full access is given to the interior 16. The latch 24 acts together with 22 a casing-side counter element 27.

As shown in Figure 2, the flap 22 is partially foldable around an axis xh parallel to its pivot axis xp. It comprises an upper part 26 and a lower part 28 which are linked together by a hinge 30 defining the parallel axis xh which in the following is called hinge axis xh. Here, the pivot axis xp extents in the middle of the flap 22 such that the parts 26, 28 have (more or less) the same size. In particular, the vertical position of the hinge 30 depends on the environment, if any installation 31 such as a centre ceiling stowage has to be taken into account. It is preferred if the upper part 26 of the flap 22 can be turned fully upwards until the hinge 30 contacts the ceiling 12 beside the installation 33.

In the closed state s1 of the flap 22 (left, lower position of the flap 22, the opening 20 is closed by the flap 22) the hinge 30 is locked. This means, the flap 22 is stiff and unfoldable (locked state of the hinge 30). For the sake of clarity, the hinge 30 is not illustrated in the left flap position.

When activating the latch 24, the hinge 30 is unlocked and foldable (unlocked state of the hinge 30). The flap 22 moves upwards until the flap 22 reached it opened stated s2 (right, upper position of the flap 22). Maximum access is given to the interior. Further on, the lower part ends at a higher vertical level (see distance d) than a known unfoldable flap 2, this creating more headroom for standing/walking passengers.

In order to close the opening 20 again, the passenger pulls the lower part 28 down, whereby the hinge 30 is locked again automatically before the flaps 22 reached its closed state s1.

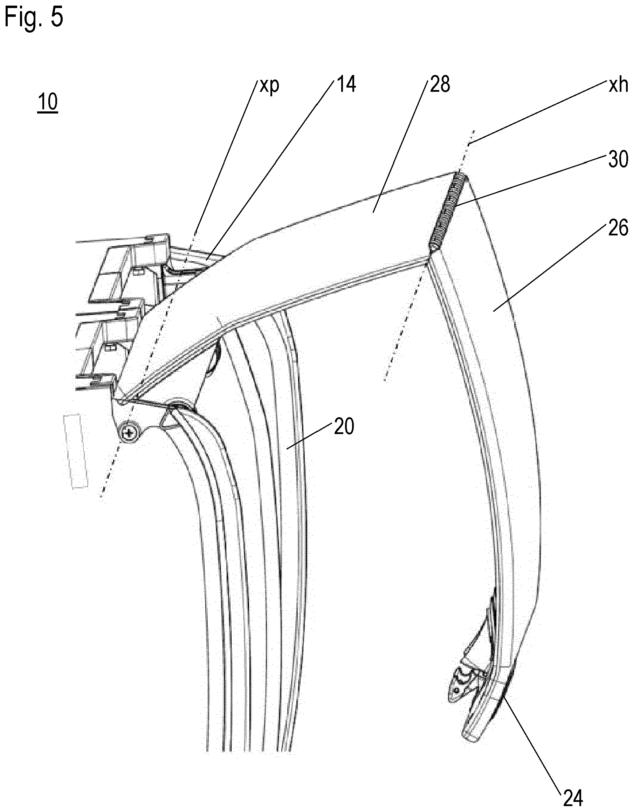

As illustrated in Figures 3 and 4, the hinge 30 is thus integrated into the flap 22 that in the unfolded state of the flap 22, its parts 26, 28 form a smooth outer surface 31 facing the cabin in the closed state s1. Looking from the back on the flap 22, a triangular gap 34 between the parts 26, 28 is provided making the hinge 30 visible and enabling the folding. In the folded state, the hinge 30 can be seen from the outside, whereas the gap 34 on the inside is closed (Figure 5).

A locking and unlocking mechanism in order to lock and unlock the hinge 30 is also integrated into the flap 22 and not visible. The mechanism will be described in more detail in the following figures.

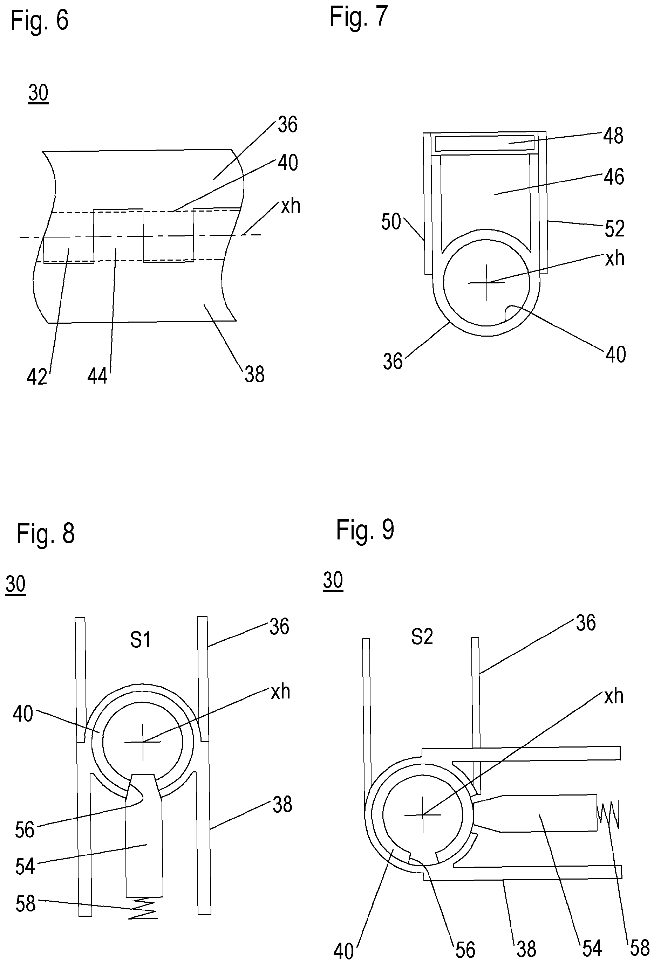

As shown in Figures 6 and 7, in a preferred embodiment, the hinge 30 is a piano hinge. It comprises two hinge halves 36, 38 and a body 40 (dashed lines) forming the hinge axis xh. The body 40 is a tube-like body extending through adjacent ring-shaped mounting sections 42, 44 of the piano hinge halves 36, 38.

In order to integrate the hinge 30 in the flap 22, the upper part 26 and the lower part 28 comprises adequate mounting space 46 at their opposite edges in which the hinge halves 36, 38 are positioned. If, for instance, the flap 22 has a sandwich structure with a honeycomb core 48 and outer layers 50, 52, the honeycomb core 48 ends in a specific distance to the respective lower or upper edge thus creating the mounting space 46 for the hinge 30 between the outer layers 50, 52. The hinge 30, respective its halves 36, 38 are bonded to the layers 50, 52 from the inside.

In Figures 8 and 9, the principle of the locking and unlocking mechanism is illustrated. What is not shown in the figures is an operative connection with the latch 24 in order to automatically active the mechanism when the latch 24 is operated by a passenger. Examples are mechanical, electromechanical, electromechanical or electric activations. If electricity is involved a control signal can be created automatically for the crew if all flaps 22 are closed before flight or landing, for instance.

The lock and unlock mechanism is provided to lock and unlock the hinge 30. Here it has a locking element 54 such as a pin and a counter element 56 acting together with the pin 54. The pin 54 is pre-tensioned by a spring 58 in its locking direction. The counter element 56 is a recess in the body 40 forming the hinge axis xh. Whereas the body 40 is non-rotatably arranged in the upper flap part 26, the pin 54 is positioned in the lower flap part 28 which can rotate around the body 40 and thus around the hinge axis xh.

In the lock state, due to the spring force the pin 54 is in form fit engagement with the recess 56. The hinge 30 is blocked and the flap 22 is unfolded (Figure 8).

When the latch 24 of the flap 22 is operated by a passenger in order to open the monument 10, the pin 54 gets out of the engagement with the recess 56 against the spring force. Now, the hinge 30 is in its unlocked state and the lower part 28 of the flap 22 can be turned around the hinge axis xh. During turning, the pin 54 glides circumferentially along the body 40 until the flap 22 is totally folded (Figure 9, opened state s2 of the flap 22 in Figure 2).

When the monument 10 should be closed again, the passenger pulls down the lower part 26 of the flap 22. The upper part 26 starts rotating around the pivot axis xp and is moved downwards. The pin 54 glides in reverse direction circumferentially along the body 40 until it reaches the recess 56 in which it is forced by the spring 58. The hinge 30 is locked again and the flap 22 is stiff again (see Figure 2, middle flap position s3). This enables the entire flap 22 to be rotated around pivot axis xp until its latch 24 is in form fit engagement with a not illustrated casing-side counter element preventing an unintentionally opening of the monument 10. With this form fit engagement, the flap 22 is transferred back into its closed state s1 (Figure 2).

Preferably, the locking and unlocking mechanism covers a plurality of locking elements 54 and respective recesses 56 which are distributed evenly along the hinge axis xh.

Disclosed is a monument for an aircraft having a multi-part flap enabling a folding of the flap during opening, and a method.

### Reference list

### Prior art

- 1: installation
- 2: flap
- 4: monument
- 6: luggage

### Invention

- 10: monument
- 12: ceiling
- 14: casing
- 16: interior
- 18: luggage
- 20: opening
- 22: flap
- 24: latch
- 26: upper part
- 28: lower part
- 30: hinge
- 32: outer surface
- 33: installation
- 34: gap
- 36: hinge half
- 38: hinge half
- 40: body
- 42: ring-shaped mounting section
- 44: ring-shaped mounting section
- 46: mounting space
- 48: honeycomb core
- 50: outer layer
- 52: outer layer
- 54: locking element (pin)
- 56: counter element (recess)
- 58: spring

- s1: closed state of the flap
- s2: opened state of the flap
- s3: locked flap during closing movement

- xp: pivot axis
- xh: hinge axis
- d: distance

## Claims

1. Monument (10) of an aircraft, for instance an overhead stowage compartment, having an interior (16) and a flap (22),
wherein
- the interior is adapted to create a stowage area for objects, for instance luggage; and
- the flap (22) is adapted to cover an opening (20) of the interior (16) so that the objects (18) within the interior (16) are secured against falling out of the interior (16),
wherein the flap (22)
- is arranged pivotable around a pivot axis (xp);
- secured against unintentionally opening; and
- comprises at least an upper cover part (26) and a lower cover part (28),
wherein the parts (26, 28) are connected to each other by a hinge (30) having a hinge axis (xh) extending parallel to the pivot axis (xp); and
wherein a locking and unlocking mechanism (54, 56, 58) is provided in order to lock and unlock the hinge (30).

2. Monument according to claim 1, wherein the locking and unlocking mechanism (54, 56, 58) comprises at least one locking element (54) which is in operative connecting with a latch (24) which is adapted to be operated by a user in order to open the flap (22).

3. Monument according to claim 2, wherein the at least locking element (54) interacts with a body (40) forming the hinge axis (xh) such that in the locked state of the hinge (30) the at least one locking element (54) is in form fit engagement with the body (40) and in the unlocked state the engagement is abolished.

4. Monument according to claim 3, wherein the at least one locking element (54) is a pin-like element which is pre-tensioned in its locked position.

5. Monument according to any of the claims 2, 3 or 4, wherein a plurality of locking elements (54) is provided which are evenly distributed along the hinge axis (xh).

6. Monument according to any of the preceding claims, wherein the hinge (30) is a piano hinge having two hinge halves (36, 38) and the body (40) forming the hinge axis (xh) is a tube-like body extending through adjacent ring-shaped mounting sections (42, 44) of the piano hinge halves (36, 38) and having recesses (56) in order to receive the pin-like elements (54) during locking.

7. Monument according to claim 6, wherein the hinge (30) is integrated in the upper part (26) and the lower part (28) of the flap (22) such that a smooth outer flap surface (32) facing the cabin in the closed state (s1) is created when the hinge (30) is locked.

8. Method to open a closed monument of an aircraft, wherein during an opening movement of a flap (22) covering an opening (20) of the interior (16) in the close state (s1), the flap (22) will be folded partially.

9. Method according to claim 8, wherein during a closing movement of the flap (22), the flap (22) will be unfolded.

10. Method according to claims 8 or 9, wherein by operating a flap latch (24) in order to unlock the flap (22), the flap (22) is prepared automatically for folding.
